# EUROPEAN PATENT APPLICATION

(11) **EP 2 908 167 A1**
(43) Date of publication of application: **19.08.2015**
(21) Application number: 13845348.5
(22) Date of filing: 06.06.2013
(51) Int. Cl.: G02B 23/18, G02B 7/12, G02C 5/12, G02C 5/16

(54) **WEARABLE BINOCULARS**

(30) Priority: 09.10.2012 JP 2012224313
(71) Applicant: Santeplus, Inc., Chuo-ku Kobe-shi Hyogo 651-0087 (JP)
(72) Inventor: SAKATA, Naoaki, Hyogo 651-0087 (JP); IWANAMI, Masatomi, Suwa-shi Nagano 392-0015 (JP)
(74) Representative: Müller Schupfner & Partner Patent- und Rechtsanwaltspartnerschaft mbB
(86) International application number: PCT/JP2013/065712
(87) International publication number: WO 2014/057711

(57) **Abstract**

Wearable binoculars comprising: a binocular main body 10 having a pair of lens barrels that support at least an objective lens and an ocular lens and mounting each lens barrel aligned in parallel with an interpupillary distance adjustment mechanism for adjusting an interval from each other; a frame 20 provided with a front main frame 21 and a pair of temples 22 extending backward from both sides of the main frame 21 and the main frame 21 coupled with the binocular main body 10, the temples 22 locked on temporal parts and ears of a wearer to position the binocular main body 10 in front of eyes; and a nose pad 30 having a deformable pad portion 32 opened in approximately inverted truncated chevron shape, the pad portion 32 locked on a nose of the wearer to support the binocular main body 10 and also an opening angle of the pad portion 32 being adjusted to change a locking position with the nose, and enabling positional adjustment of the binocular main body 10 to both eyes of the wearer.

## Description

### TECHNICAL FIELD

The present invention relates to wearable binoculars that may be put on the face for hands-free use and specifically to wearable binoculars that allow to have good comfort of wearing and that exhibit high utility for going to the theater, watching sports, fishing, and the like.

### BACKGROUND ART

Conventionally, many patent applications and utility model registration applications related to binoculars configured to be put on the face have been filed. The present applicants made a preliminary survey on patent applications and utility model registration applications in the past before the application and the following Patent Documents 1 through 63 were published. Patent Documents 1 through 63 include those for general use that are used for going to the theater, watching sports, fishing, and the like and those for medical use that are used for surgery and treatment.

As wearable binoculars for general use, for example, Japanese Patent Application Kokai Publication No. 2011-512557 (Patent Document 1) proposes glasses with a telescope that is configured to be provided with an objective lens and an ocular lens in a hollow eyeglass frame, to form an optical path from the objective lens to the ocular lens by an optical system arranged in the hollow, and to provide a magnified image to the eyes of a user. Japanese Patent Application Kokai Publication No. 2009-31381 (Patent Document 3) proposes sunglass binoculars having lens portions of sunglasses coupled with an ocular side of the binoculars.

Further, West Germany Utility Model Application Publication No. DE20 2005 008353 U1 (Patent Document 13) proposes a magnifying glass for watching television having a pair of ocular lenses attached to an eyeglass frame and also having a pair of objective lenses in front of these ocular lenses arranged at an interval.

In the meanwhile, as a wearable magnifying glass for medical use, for example, Japanese Patent Application Kokai Publication No. 2011-2642 (Patent Document 2) proposes a magnifying glass for medical use mountable to glasses via an adapter to magnify inside the oral cavity of a patient. Japanese Patent Application Kokai Publication No. 2007-310006 (Patent Document 4) proposes a magnifying glass for medical use that is configured to attach a pair of magnifying optical system units to left and right glass lenses and also having these magnified optical system units coupled with a frame for fixing the head for treatment of fine texture, such as brain surgery and a cardiovascular procedure. Japanese Patent Application Kokai Publication No. 2007-140523 (Patent Document 5) proposes a head loupe that is configured to couple a pivot fixed to a head mount mountable to the head and a pivot fixed to a pair of magnifying optical elements with an extension rod extending along a longitudinal axis.

### PRIOR ART DOCUMENTS

### Patent Documents

Patent Document 1: Japanese Laid-open Patent [Kokai] Publication No. 2011-512557
Patent Document 2: Japanese Laid-open Patent [Kokai] Publication No. 2011-002642
Patent Document 3: Japanese Laid-open Patent [Kokai] Publication No. 2009-031381
Patent Document 4: Japanese Laid-open Patent [Kokai] Publication No. 2007-310006
Patent Document 5: Japanese Laid-open Patent [Kokai] Publication No. 2007-140523
Patent Document 6: International Publication No. WO07/057987
Patent Document 7: Japanese Laid-open Patent [Kokai] Publication No. 2006-011208
Patent Document 8: Japanese Laid-open Patent [Kokai] Publication No. 2005-257802
Patent Document 9: Japanese Laid-open Patent [Kokai] Publication No. 2005-128305
Patent Document 10: Japanese Laid-open Patent [Kokai] Publication No. 2005-128158
Patent Document 11: Japanese Laid-open Patent [Kokai] Publication No. 2005-107250
Patent Document 12: Japanese Laid-open Patent [Kokai] Publication No. 2005-018068
Patent Document 13: Specification of West Germany Utility Model Application as published under No. DE20 2005 008353 U1
Patent Document 14: Japanese Laid-open Patent [Kokai] Publication No. 2004-138870
Patent Document 15: Japanese Laid-open Patent [Kokai] Publication No. 2004-053910
Patent Document 16: Japanese Laid-open Patent [Kokai] Publication No. 2003-532137
Patent Document 17: Japanese Laid-open Patent [Kokai] Publication No. 2003-315688
Patent Document 18: Japanese Laid-open Patent [Kokai] Publication No. 2003-295128
Patent Document 19: Japanese Laid-open Patent [Kokai] Publication No. 2003-195185
Patent Document 20: Japanese Laid-open Patent [Kokai] Publication No. Hei 10-510369 (1998)
Patent Document 21: Japanese Laid-open Patent [Kokai] Publication No. Hei 08-220445 (1996)
Patent Document 22: Japanese Laid-open Patent [Kokai] Publication No. Hei 05-045627 (1993)
Patent Document 23: Japanese Laid-open Patent [Kokai] Publication No. Hei 03-069908 (1991)
Patent Document 24: Japanese Laid-open Patent [Kokai] Publication No. Hei 03-026113 (1991)
Patent Document 25: Japanese Laid-open Patent [Kokai] Publication No. Hei 02-075616 (1990)
Patent Document 26: Japanese Laid-open Patent [Kokai] Publication No. Hei 01-023020 (1989)
Patent Document 27: Japanese Laid-open Patent [Kokai] Publication No. Sho 62-065621 (1987)
Patent Document 28: Japanese Laid-open Patent [Kokai] Publication No. Sho 60-107817 (1985)
Patent Document 29: Japanese Laid-open Patent [Kokai] Publication No. Sho 60-120417 (1985)
Patent Document 30: Japanese Laid-open Patent [Kokai] Publication No. Sho 59-009313 (1984)
Patent Document 31: Japanese Laid-open Patent [Kokai] Publication No. Sho 57-011508 (1982)
Patent Document 32: Japanese Laid-open Patent [Kokai] Publication No. Sho 56-080507 (1981)
Patent Document 33: Japanese Laid-open Patent [Kokai] Publication No. Sho 55-052122 (1980)
Patent Document 34: Japanese Laid-open Patent [Kokai] Publication No. Sho 55-116314 (1980)
Patent Document 35: Japanese Laid-open Patent [Kokai] Publication No. Sho 52-114040 (1977)
Patent Document 36: Japanese Laid-open Patent [Kokai] Publication No. Sho 51-065846 (1976)
Patent Document 37: Japanese Laid-open Patent [Kokai] Publication No. Sho 51-108646 (1976)
Patent Document 38: Japanese Laid-open Patent [Kokai] Publication No. Sho 50-069147 (1975)
Patent Document 39: Japanese Laid-open Patent [Kokai] Publication No. Sho 49-022947 (1974)
Patent Document 40: Japanese Examined Patent [Kokoku] Publication No. Sho 39-036258 (1964)
Patent Document 41: Japanese Examined Patent [Kokoku] Publication No. Sho 38-018563 (1963)
Patent Document 42: Japanese Examined Patent [Kokoku] Publication No. Sho 38-013870 (1963)
Patent Document 43: Japanese Examined Patent [Kokoku] Publication No. Sho 37-010076 (1962)
Patent Document 44: Japanese Examined Patent [Kokoku] Publication No. Sho 36-003760 (1961)
Patent Document 45: Japanese Examined Patent [Kokoku] Publication No. Sho 36-002048 (1961)
Patent Document 46: Japanese Examined Patent [Kokoku] Publication No. Sho 35-026368 (1960)
Patent Document 47: Japanese Examined Patent [Kokoku] Publication No. Sho 35-018968 (1960)
Patent Document 48: Japanese Examined Patent [Kokoku] Publication No. Sho 34-011850 (1959)
Patent Document 49: Japanese Examined Patent [Kokoku] Publication No. Sho 33-016464 (1958)
Patent Document 50: Japanese Examined Patent [Kokoku] Publication No. Sho 11-004133 (1936)
Patent Document 51: Japanese Examined Patent [Kokoku] Publication No. Sho 29-003973 (1954)
Patent Document 52: Japanese Examined Patent [Kokoku] Publication No. Sho 29-001762 (1954)
Patent Document 53: Japanese Examined Patent [Kokoku] Publication No. Sho 25-009971 (1950)
Patent Document 54: Japanese Examined Patent [Kokoku] Publication No. Sho 25-001621 (1950)
Patent Document 55: Japanese Examined Patent [Kokoku] Publication No. Sho 24-008370 (1949)
Patent Document 56: Japanese Examined Patent [Kokoku] Publication No. Sho 09-006690 (1934)
Patent Document 57: Japanese Examined Patent [Kokoku] Publication No. Sho 08-012107(1933)
Patent Document 58: Japanese Examined Patent [Kokoku] Publication No. Sho 07-018416 (1932)
Patent Document 59: Japanese Examined Patent [Kokoku] Publication No. Sho 07-013750 (1932)
Patent Document 60: Japanese Examined Patent [Kokoku] Publication No. Sho 07-013749 (1932)
Patent Document 61: Japanese Examined Patent [Kokoku] Publication No. Sho 03-002120 (1928)
Patent Document 62: Japanese Patent Publication No. 3167850
Patent Document 63: Japanese Patent Publication No. 3007860

### DISCLOSURE OF THE INVENTION

### Problems to be solved by the Invention

As described above, many patent applications and utility model registration applications on wearable binoculars have been filed in the past. However, among Patent Documents 1 through 63, there are extremely few wearable binoculars those for general use that are used for going to the theater, watching sports, fishing, and the like that are worked in reality. The applicants have researched to find that currently worked wearable binoculars for general use are only a working product of the present invention described in Patent Document 13 of a trade name "MAX TV" of Eschenbach. Why conventional wearable binoculars for general use have not been reduced to practice in such a manner is considered because there are technical problems as follows.

### <Issue of weight balance>

For example, in a configuration having binoculars attached to an eyeglass frame as the wearable binoculars in Patent Document 3, a binocular main body of a heavy weight hangs out ahead of the eyeglass frame. Therefore, the weight of the binocular main body is focused on the nose of a wearer and comfort of stable wearing is not obtained. The unstable wearable state causes position offset of the both eyes of the wearer and the binocular main body and it is not possible to continuously maintain a stable visual field. Therefore, even when performing conventional wearable binoculars for general use, it is not possible to obtain nice comfortable wear.

The wearable binoculars in Patent Document 13 have a configuration where an objective lens faces an ocular lens at an interval to omit a heavy lens barrel, so that it does not cause the problem of weight as described above. However, since the magnifying optical system is simple, they have a magnification of only 2.1 fold and are capable of being used for going to the theater, watching sports, fishing, and the like and the use is limited solely to watching a television screen.

### <Issue of adjustment mechanism>

### «Adjustment of wearing position»

The configuration of attaching binoculars to an eyeglass frame as the wearable binoculars in Patent Document 3 does not have a mechanism for positioning of the binocular main body and both eyes of the wearer. Due to the binocular main body of a heavy weight going down similar to regular glasses, this causes position offset of both eyes of the wearer and the binocular main body.

In the meanwhile, a wearable magnifying glass for medical use as Patent Documents 2, 4, and 5 has a mechanism for positioning of a magnifying glass main body and both eyes of the wearer. However, the adjustment mechanism of a wearing position including combination of hinges as Patent Document 2 and the extending adjustment mechanism of a wearing position as Patent Document 5 have a complex structure and a heavy weight. Providing wearable binoculars for general use with such adjustment mechanism of a wearing position leads decrease in comfort of wearing due to the increase in weight and rise in manufacturing costs due to the complex structures. The adjustment mechanism of a wearing position including a long hole and a screw as Patent Document 4 has to be adjusted using a driver and it is not possible to readily adjust the wearing position of the binocular main body during going to the theater, watching sports, fishing, and the like.

Further, when having a configuration of coupling an eyeglass frame and a magnifying glass main body with a movable member, such as a hinge, a pivot, a sliding shaft, and an extension rod, as the wearable magnifying glass in Patent Documents 2 and 5, a joint between the eyeglass frame and the magnifying glass main body does not become stable, which causes position offset of both eyes of the wearer and the magnifying glass main body and it is not possible to continuously maintain a stable visual field. Although it is possible to improve accuracy of adjustment, accuracy of fixing, and operability of movable members used for coupling in expensive wearable magnifying glasses for medical use, it is not realistic to employ a mechanism equivalent to precision instruments for medical use for relatively inexpensive wearable binoculars for general use from the perspective of applications and costs thereof.

### «Focus adjustment, interpupillary distance adjustment»

In a configuration of carrying out focus adjustment by moving a pair of objective lenses back and forth as the wearable binoculars in Patent Document 3, it is difficult to focus a moving object during going to the theater, watching sports, and the like and focus adjustment does not catch up. A focus adjustment mechanism causes wearable binoculars to be heavier in weight and to impair the comfort of stable wearing. In addition, when an interpupillary distance adjustment mechanism is provided separately from the focus adjustment mechanism, a degree of design freedom of the wearable binoculars turns out to be limited.

The present invention have been made in view of the above problems, and it is an object thereof to provide wearable binoculars that are capable of distributing load of a binocular main body, simplify various adjustment mechanism, allow to obtain good comfort of wearing, and exhibit high utility for going to the theater, watching sports, fishing, and the like.

### Means to solve the Problems

In order to achieve the above object, wearable binoculars of the present invention are configured to include: a binocular main body having a pair of lens barrels that support at least an objective lens and an ocular lens and mounting each lens barrel aligned in parallel with an interpupillary distance adjustment mechanism for adjusting an interval from each other; a frame provided with a front main frame and a pair of temples extending backward from both sides of the main frame and the main frame coupled with the binocular main body, the temples locked on temporal parts and ears of a wearer to position the binocular main body in front of eyes; and a nose pad having a deformable holding portion opened in approximately inverted truncated chevron shape, the holding portion locked on a nose of the wearer to support the binocular main body and also an opening angle of the holding portion being adjusted to change a locking position with the nose, and enabling positional adjustment of the binocular main body to both eyes of the wearer.

According to the above configuration, by adjusting the opening angle of the nose pad (holding portion opened in approximately inverted truncated chevron shape), it is possible to change the locking position with the nose and to carry out positional adjustment of the binocular main body to both eyes of the wearer. Thus, a conventional mechanical adjustment mechanism of a wearing position is not required and it is possible to reduce the load on the nose of the wearer. In addition, by enlarging the contact area of the holding portion of the nose pad, it is possible to distribute the load on the nose of the wearer and possible to obtain comfort of stable wearing and nice comfortable wear. Further, the wearer is capable of optimizing the position of the binocular main body to both eyes only by adjusting the opening angle of the nose pad while going to the theater, watching sports, fishing, and the like.

It is preferred to have a configuration where the nose pad has a deformable framework made of metal in an inverted V or U shape and a pad portion of an elastic body covering the framework.

According to the above configuration, by deforming the framework made of metal in an inverted V shape or inverted U shape, it is possible to adjust the pad portion of an elastic body at an arbitrary opening angle and possible to freely change a locking position between the nose pad and the nose. Thus, it is possible to optimize the position of the binocular main body to both eyes only by adjusting the opening angle of the nose pad while going to the theater, watching sports, fishing, and the like. In addition, the framework made of metal is maintained at the optimized opening angle and the pad portion of an elastic body tightly attaches to the nose, so that it is possible to prevent position offset of the binocular main body to both eyes and possible to maintain a stable visual field over a long period of time.

Here, the framework may be deformed with hands by the wearer and may be in a thin plate or rod shape of metal capable of maintaining the deformation, such as stainless steel, aluminum, iron, and copper, for example. In the meanwhile, the pad portion is preferably made of an elastic and deformable material, for example, silicone that is good in texture and does not cause allergy. In addition, by enlarging the contact area of the pad portion, it is possible to distribute the load on the nose of the wearer and possible to make the comfortable wearing of the present wearable binoculars better.

It is preferred to have a configuration where the temples have a curved shape corresponding to a curve of the temporal parts of the wearer to be locked on the temporal parts of the wearer with elasticity.

According to the above configuration, the temples in a curved shape are locked corresponding to a curve of the temporal parts of the wearer with elasticity, so that it is possible to distribute the weight of the binocular main body coupled with the main frame to the temporal parts of the wearer along the curved shape of the temples. Thus, it is possible to securely fix the binocular main body to the temporal parts of the wearer and possible to greatly reduce the load on the nose of the wearer. By such temples as well as the nose pad described above, the weight of the binocular main body is distributed effectively and comfort of stable fitting is obtained on the temporal parts and the nose, and it is possible to achieve nice comfortable wear not found in wearable binoculars in the past.

It is preferred to have a configuration where at least a free end side of the temples is provided with antislip rubber or elastomer making contact with the temporal parts of the wearer.

According to the above configuration, the antislip of rubber or elastomer tightly attach to the temporal parts of the wearer and it is also possible to improve the holding power and the comfort of fitting of the temples in a curved shape. Thus, the ratio of the weight of the binocular main body to be born by the temples in a curved shape increases and effective distribution of the weight is enabled.

The rubber or an elastomer of the antislip may be provided only on free end sides and may also be provided along curved inner surfaces of the temples. For example, when the free end side of the temples is curved inwardly to make contact with the temporal parts of the wearer, it is possible to obtain a sufficient non-slip effect by providing rubber or elastomer of the antislip only on the free end side of the temples.

It is preferred to have a configuration where a focus of the objective lens is fixed near infinity capable of dispensing with focusing capability of the binocular main body.

According to such configuration, it is possible to omit a focus dial provided in regular binoculars and a focusing operation using the same, and it is possible to focus an object using an adjusting mechanism of the human eyes that is originally provided. That is, by fixing the focus of the objective lens near infinity, focusing is enabled only by the adjusting mechanism of the human eyes from a relatively close distance to a far distance. Preferably, by making the focal depth of the objective lens to be deep by optical design and the effective diameter of the objective lens smaller, the focus free (fixed focus) mechanism of the binocular main body becomes easier to use.

According to the above configuration, it is possible to omit a focus adjustment mechanism from the configuration of the wearable binoculars for the entire weight reduction and also to improve the degree of design freedom. It is also possible to focus a moving object without adjustment while going to the theater, watching sports, and the like and possible to greatly improve utility of the wearable binoculars.

It is preferred to have a configuration where the interpupillary distance adjustment mechanism includes: a right-and-left screw forming a male screw with right-hand thread and a male screw with left-hand thread respectively at each side of a shaft; an operation portion to rotate the right-and-left screw; a cover covering the right-and-left screw provided with a groove defining a movable range of each lens barrel; a joining portion of each lens barrel having a female screw screwed respectively with each male screw of the right-and-left screw; and a guide rod arranged in parallel with the right-and-left screw, each lens barrel attached slidably at each side.

According to the above configuration, it is possible to cause each lens barrel of the binocular main body to approach or separate only by rotating the right-and-left screw by the operation portion and it is possible to carry out interpupillary distance adjustment of the binocular main body easily with a simple configuration. By employing the nose pad and the focus free mechanism described above, the wearable binoculars of the present invention may be provided only with the interpupillary distance adjustment mechanism as a mechanical adjuster for great weight reduction and simplification of the binocular main body. Such weight reduction and simplification of the binocular main body bring notable improvement of the comfortable wearing of the present wearable binoculars.

It is preferred to have a configuration to include a coupling structure to join the binocular main body and the main frame, the coupling structure having a convex portion provided in one of the binocular main body or the main frame and a concave portion provided in another, in a state of fitting the convex portion and the concave portion to each other, two screws or pins in parallel with a projecting direction of the convex portion are attached to reach the concave portion by penetrating both sides of the convex portion, and one or two screws or pins intersecting with the projecting direction of the convex portion are attached by penetrating both the convex portion and the concave portion.

According to the above configuration, it is possible to firmly couple and fix the binocular main body and the main frame and enables an integral joint between the binocular main body and the frame. Thus, it is possible to prevent position offset of both eyes of the wearer and the binocular main body and to contribute to continuous maintenance of a stable visual field.

In addition, it is possible to separate the binocular main body and the frame from each other by removing screws and pins, and it is possible to easily repair or maintain these components. In particular, different specialists handle the binocular main body as a magnifying optical system and the frame as a metal or synthetic resin structure, so that it is possible to separate the binocular main body from the frame and manufacture, repair, or maintain these components by the right people at the right positions.

It is preferred to have a configuration where eye pieces are provided so as to hang outward from around the ocular lens of each lens barrel and that has a surface facing both eyes of the wearer to be an approximately flat surface.

According to the above configuration, it is not only possible to improve visibility of an image by blocking light from outside incident between both eyes of the wearer and the ocular lens with the eye pieces, but also possible to make the comfortable wearing of the present wearable binoculars to be better because the eye pieces formed in an approximately flat surface do not easily make contact with the eyelashes of the wearer.

Such eye pieces may be integrally formed with a material same as each lens barrel, such as metal and a synthetic resin, and may also be components of rubber or a synthetic resin separate from each lens barrel.

### Effects of the Invention

According to wearable binoculars of the present invention, it is possible to distribute load of a binocular main body, simplify various adjustment mechanism, obtain good comfort of wearing, and exhibit high utility for going to the theater, watching sports, fishing, and the like.

### BRIEF DESCRIPTION OF THE DRAWINGS

Fig. 1 is a perspective view illustrating wearable binoculars according to an embodiment of the present invention.
Fig. 2 is a plan view of the above wearable binoculars.
Fig. 3 is a bottom view of the above wearable binoculars.
Fig. 4 is a right side view of the above wearable binoculars.
Fig. 5 is a front view of the above wearable binoculars.
Fig. 6 is a rear view of the above wearable binoculars.
Fig. 7 is cross-sectional view illustrating a binocular main body configuring the above wearable binoculars taken from A-A in Fig. 5.
Fig. 8 is a cross-sectional view illustrating an interpupillary distance adjustment mechanism of the above binocular main body.
Fig. 9 is a cross-sectional view illustrating a coupling structure of the above binocular main body with a main frame.
Fig. 10 is a front view of a nose pad configuring the above wearable binoculars.

### MODE FOR CARRYING OUT THE INVENTION

Descriptions are given below to wearable binoculars according to an embodiment of the present invention with reference to the drawings.

### <Entire configuration of wearable binoculars>

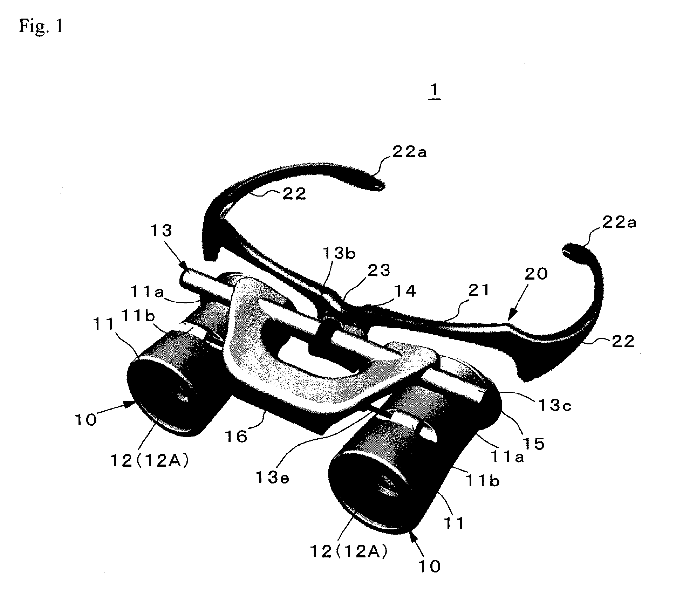

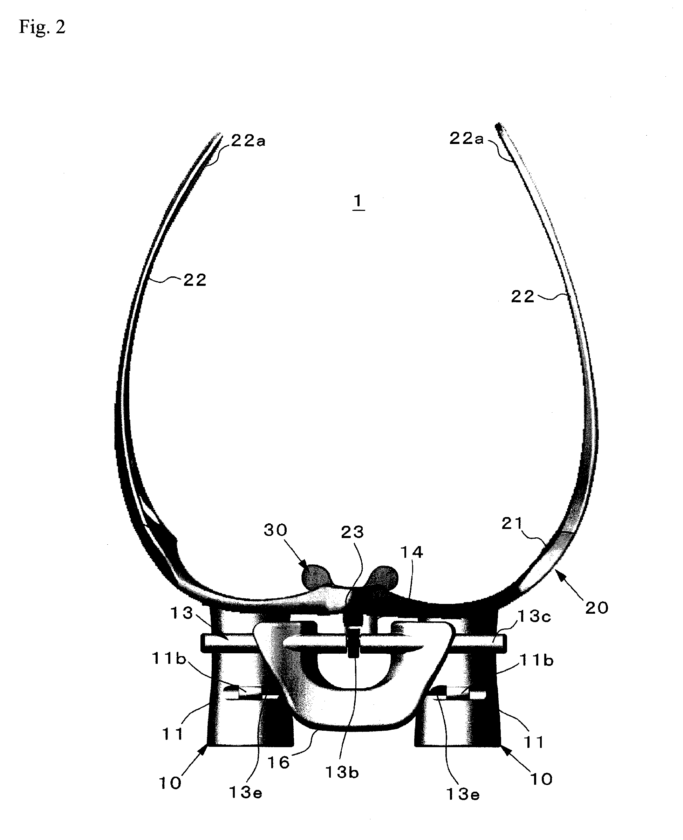

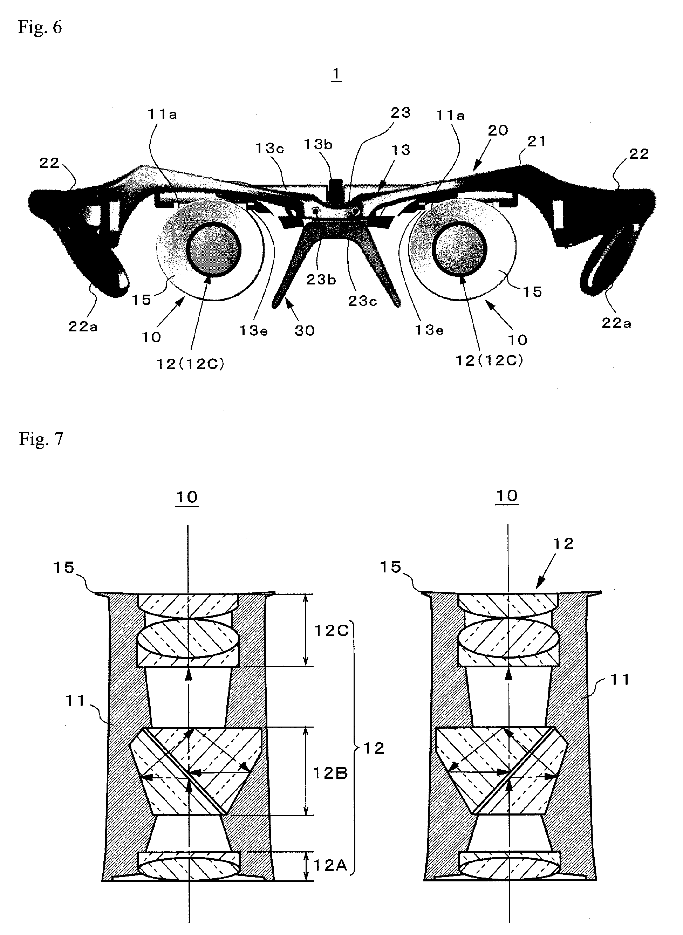

In Figs. 1 through 6, wearable binoculars 1 of the present embodiment are mainly configured with a pair of binocular main bodies 10, 10, a frame 20, and a nose pad 30. The pair of binocular main bodies 10, 10 are respectively screwed to a right-and-left screw 13a of an interpupillary distance adjustment mechanism 13. The interpupillary distance adjustment mechanism 13 is provided with a first coupling portion 14 and the frame 20 is provided with a second coupling portion 23, respectively, and via these first and second coupling portions 14, 23, couples each binocular main body 10 and the frame 20 with each other. As illustrated in Fig. 6, the nose pad 30 is screwed immediately below the second coupling portion 23 on the back side of the frame 20. Descriptions are given below to the configuration of each portion of the binocular main body 10, the interpupillary distance adjustment mechanism 13, the frame 20, the first and second coupling portions 14, 23, and the nose pad 30 in order with reference to the drawings.

### <Binocular main body>

In Figs. 1 through 6, each binocular main body 10 has a configuration mainly of storing magnifying optical systems 12, 12 (refer to Fig. 7) in lens barrels 11, 11 made of metal or a synthetic resin.

### <<Lens barrel>>

Although each lens barrel 11 is preferably made of a synthetic resin, such as engineering plastics, for weight reduction and cost reduction, it may also be made of light metal, such as titanium, aluminum, and magnesium. Such pair of binocular main bodies 10, 10 have a shape and a layout configuration bilaterally symmetrical to each other including the magnifying optical systems 12.

In the upper rear of each lens barrel 11, joining portions 11a, 11a to be screwed to the right-and-left screw 13a of the interpupillary distance adjustment mechanism 13 described above are projected respectively. In the upper front of each lens barrel 11, a pair of sliding holes 11b, 11b are formed integrally. Through these sliding holes 11b, 11b, both end sides of a guide rod 13e illustrated in Fig. 1 are inserted.

While details are described later, when the right-and-left screw 13a of the interpupillary distance adjustment mechanism 13 is rotated, each joining portion 11a moves in a direction opposite to each other along the right-and-left screw 13a. Thus, the pair of binocular main bodies 10, 10 make approaching and separating actions in left and right directions. The guide rod 13e and each sliding hole 11b guide front side of each binocular main body 10 while moving in left and right directions to make the approaching and separating actions smooth.

### «Eye piece»

As illustrated in Fig. 6, approximately elliptical eye pieces 15, 15 hanging outward are integrally formed at rear ends of the respective lens barrels 11. In the present embodiment, the back side (the surface facing both eyes of the wearer) of each eye piece 15 is an approximately flat surface. By employing such configuration, each eye piece 15 does not easily make contact with the eyelashes of the wearer, which brings nicer comfortable wearing of the wearable binoculars 1.

The eye pieces 15 may be integrally formed with a material, such as metal and a synthetic resin, same as each lens barrel 11 and may also be components of rubber or a synthetic resin separate from each lens barrel 11.

### «Magnifying optical system»

As illustrated in Fig. 7, inside each lens barrel 11, the magnifying optical system 12 including an objective lens group 12A, an erecting prism 12B, and an ocular lens group 12C from the bottom in the drawing in order is stored. The magnifying optical system 12 in the present embodiment employs a prism type where a convex lens is used for both the objective lens group 12A and the ocular lens group 12C and the erecting prism 12B is between these objective lens group 12A and ocular lens group 12C. The prismatic binocular main body 10 has a broad field of vision in comparison with a Galilean one and is capable of increasing the magnification. In addition, the erecting prism 12B shortens the optical path and is capable of shortening the entire length of the binocular main body 10.

The magnifying optical system 12 has a configuration of five lens elements in two groups and employs a focus free (fixed focus) mechanism, which does not require focusing of the binocular main body 10. In the present embodiment, the objective lens group 12A is set to have a focal length of approximately 45 mm and an effective diameter of 13 mm. The objective lens group 12A also has a depth of field to focus from approximately 5 m to infinity. According to such configuration, the focus is on the place where the wearer sees by the depth of field of the objective lens group 12A in a range from approximately 5 m to infinity and the focus is by the focus adjustment function of the eyes of the wearer in approximately 5 mm or closer.

The erecting prism 12B in the present embodiment includes combination of an auxiliary prism and a Dach prism. Light incident from the objective lens group 12A enters the auxiliary prism and reflected to the Dach prism. The light incident to the Dach prism is reflected inside thereof to be emitted to the ocular lens group 12C. Such erecting prism 12B makes an erect image by inverting an image in the process of reflection and also linearizes the optical path between the objective lens group 12A and the ocular lens group 12C. It is thus possible to make an outer shape of the lens barrel 11 in a slim linear shape, and as well as the effect of shortening the optical path, miniaturization of the binocular main body 10may be achieved.

Here, the wearable binoculars 1 of the present embodiment is assumed to be used for applications, such as going to the theater, watching sports, a concert, a lecture, and fishing, and the magnification of the magnifying optical system 12 is preferably from four to eight folds, approximately. Although it is also possible to make the magnification of the magnifying optical system 12 from nine to twelve folds, the weight of the magnifying optical system 12 becomes slightly heavier when exceeding eight folds and some wearers may feel the load.

### <Interpupillary distance adjustment mechanism>

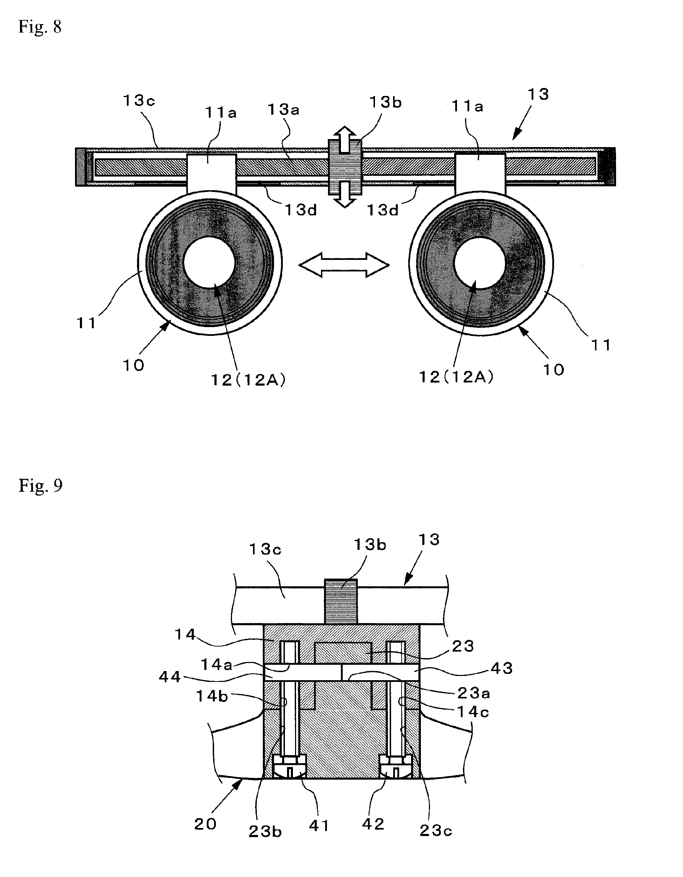

As illustrated in Figs. 1 and 8, the interpupillary distance adjustment mechanism 13 has a configuration mainly of attaching an operation portion 13b at the center of the right-and-left screw 13a and covering the right-and-left screw 13a with a cylindrical cover 13c. As illustrated in Fig. 8, the right-and-left screw 13a is formed with a male screw with right-hand thread and a male screw with left-hand thread by sandwiching the operation portion 13b and the left and right male screws are screwed respectively with the joining portions 11a of the respective lens barrels 11. The cover 13c is provided with grooves (or openings) 13d respectively corresponding to the left and right male screws.

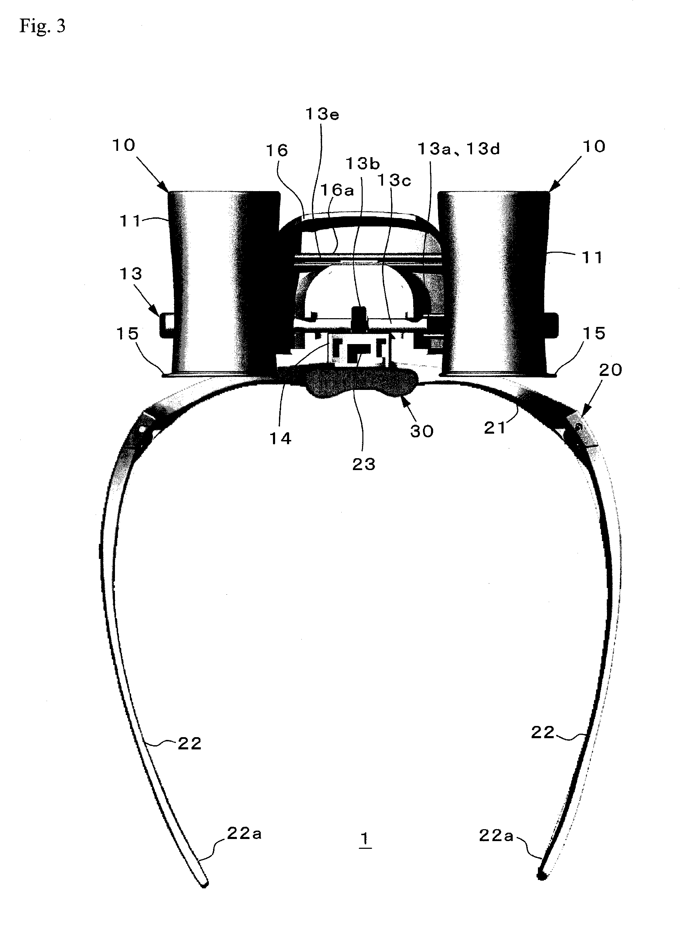

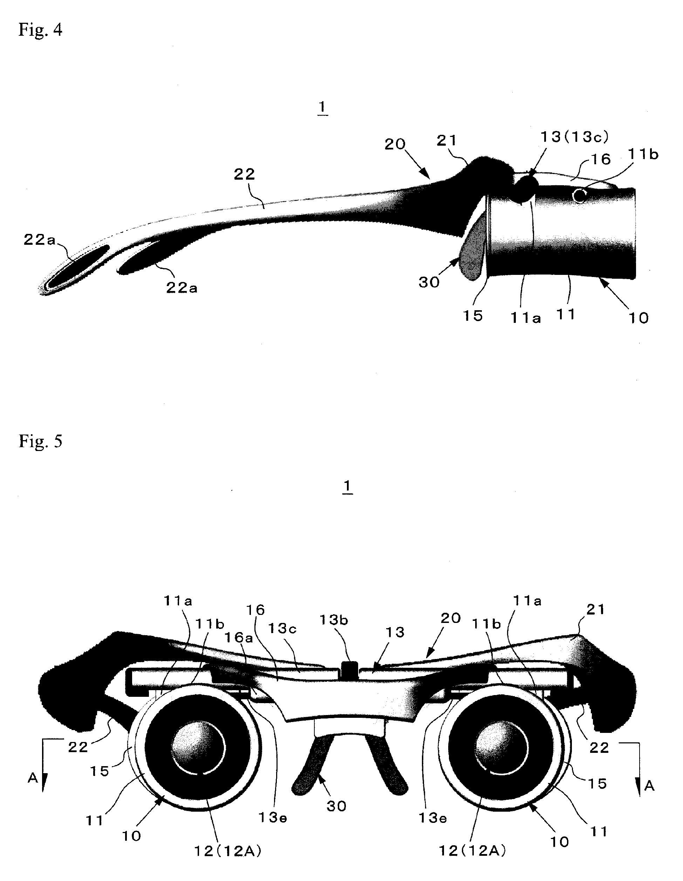

In the meanwhile, as illustrated in Fig. 1, the cover 13c is formed integrally with a decoration 16 in an approximately V or U shape in a plan view. As illustrated in Figs. 3 and 5, the back side of the decoration 16 is provided with an elongated cylindrical bearing 16a approximately in parallel with the right-and-left screw 13a. In the bearing 16a, the central portion of the guide rod 13e described above. Both sides of the guide rod 13e are inserted through the respective sliding holes 11b of the lens barrels 11 described above.

In the interpupillary distance adjustment mechanism 13 having the above configuration, when the operation portion 13b is rotated in either direction of forward or reverse, each of the male screw of the right-and-left screw 13a is rotated in directions opposite to each other and the pair of binocular main bodies 10, 10 having the respective male screws screwed via the joining portions 11a make approaching and separating actions in left and right directions. At this time, the front side of each binocular main body 10 is guided by the guide rod 13e inserted through each sliding hole 11b, so that each binocular main body 10 carries out approaching and separating actions smoothly while keeping balance of front and rear. In such a manner, it is possible to match an interval between the ocular lenses of the respective binocular main bodies 10 to a distance between both eyes (interpupillary distance) of the wearer.

As illustrated in Figs. 1 through 3, at the center of the cover 13c of the right-and-left screw 13a, the first coupling portion 14 in an approximately concave shape projecting backward in the drawing is formed integrally. In the present embodiment, the interpupillary distance adjustment mechanism 13 is coupled with the frame 20 via the first coupling portion 14 to integrally fix the pair of binocular main bodies 10 and the frame 20. Detailed descriptions are given below to the configuration of the frame 20.

### <Frame>

As illustrated in Figs. 1 through 6, the frame 20 is configured mainly with a main frame 21 and a pair of temples 22, 22. The respective temples 22 are rotatably attached to both ends of the main frame 21 via hinges and configured to allow inward folding.

Although it is not possible to fold inwardly, the main frame 21 and the pair of temples 22, 22 may also be configured integrally as a series. The material for the main frame 21 and the pair of temples 22, 22 is not particularly limited and it may be light metal, a synthetic resin, or combination of both materials as described above.

### «Main frame»

The main frame 21 has a shape that is not particularly limited as long as it has strength to withstand the weight of the respective binocular main bodies 10, 10 and the interpupillary distance adjustment mechanism 13. In the center front side of the main frame 21, as illustrated in Figs. 1 through 3, the second coupling portion 23 in an approximately convex shape coupled with the first coupling portion described above is projected. The coupling structure with the first and second coupling portions 14, 23 is described in detail later with reference to Fig. 9. In the meanwhile, in the center back side of the main frame 21, as illustrated in Fig. 6, the nose pad 30 is screwed.

### «Temple»

Each temple 22 is configured to have a curved shape corresponding to the curve of the temporal parts of the wearer and to be locked on the temporal parts of the wearer with elasticity.

Here, in the present embodiment, to the free end sides of the respective temples 22, respective antislip members 22a, 22a made of rubber or elastomer making contact with the temporal parts of the wearer are configured to be fitted. These antislip members 22a, 22a tightly attach to the temporal parts of the wearer to improve holding power and comfort of fitting of each temple 22 in a curved shape.

Each antislip member 22a may also be provided along a curved inner surface of each temple 22. In the case of such configuration, the contact area of each antislip member 22a is enlarged and adhering and holding force to the temporal parts of the wearer also increases.

### <Coupling structure>

As illustrated in Figs. 1 through 3 and Fig. 9, in the present embodiment, the first coupling portion 14 in an approximately concave shape is fitted to the second coupling portion 23 in an approximately convex shape and they are firmly fixed with two screws 41, 42 and two pins 43, 44.

In Fig. 9, in an approximately concave portion of the first coupling portion 14, a through hole 14a extending in the lateral direction in the drawing is penetrated. On a front end surface in an approximately concave shape (surface abutting the second coupling portion 23) of the first coupling portion 14, a pair of screw holes 14b, 14c respectively extending in the longitudinal direction in the drawing are provided by threading.

In the meanwhile, in an approximately convex portion of the second coupling portion 23, a through hole 23a extending in the lateral direction in the drawing is penetrated. This through hole 23a corresponds to the through hole 14a of the first coupling portion 14. On a front end surface in an approximately convex shape (surface abutting the first coupling portion 14) of the second coupling portion 23 a pair of through holes 23b, 23c respectively extending in the longitudinal direction in the drawing are penetrated. These through holes 23b, 23c correspond to the respective screw holes 14b, 14c of the first coupling portion 14.

In such coupling structure, firstly, the first coupling portion 14 in an approximately concave shape is fitted to the second coupling portion 23 in an approximately convex shape to match each other. Then, the through hole 14a communicates with the through hole 23a, and the screw holes 14b, 14c communicate with the through holes 23b, 23c, respectively. In order to maintain the fitted state, the pins 43, 44 are inserted through the through hole 14a and the through hole 23a for temporary fixing of both. After that, the screws 41, 42 are inserted respectively through the through holes 23b, 23c to be screwed to the screw holes 14b, 14c. Thus, the interpupillary distance adjustment mechanism 13 is firmly coupled and fixed to the frame 20.

The coupling structure of the binocular main bodies 10, 10 (interpupillary distance adjustment mechanism 13) with the main frame 21 is not limited to the embodiment illustrated in Fig. 9, and for example, the screws 41, 42 may be changed to pins and also the pins 43, 44 to screws. The two short pins 43, 44 in the lateral direction in the drawing may also be changed to one long pin. Note that, in the case of two short pins 43, 44, it is possible to insert the respective short pins 43, 44 through the through hole 14a from both sides of the first coupling portion 14, which makes the coupling operation easier. Further, although a fixing coupling structure using screws or pins is exemplified in the present embodiment, it may also be, for example, a detachable coupling structure by fitting grooves to rails.

### <Nose pad>

As illustrated in Fig. 5 and Fig. 6, the nose pad 30 is a deformable holding member separated in an approximately inverted V shape, and has a configuration of supporting each binocular main body 10 by locking on the nose of the wearer and also changing a locking position with the nose by adjusting the opening angle to enable positional adjustment of the respective binocular main bodies 10 to both eyes of the wearer.

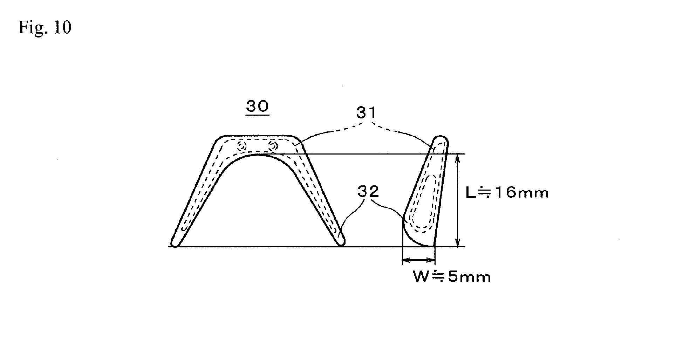

As illustrated in Fig. 10, the nose pad 30 in the present embodiment has a configuration of covering a deformable framework 31 made of metal in an inverted V or u shape with a pad portion 32 of an elastic body of rubber or elastomer. The framework 31 may be in a thin plate or rod shape of metal, such as stainless steel, aluminum, iron, and copper, for example, that is capable of being deformed with hands by the wearer and also maintaining the deformation. In the meanwhile, the material for the pad portion 32 is not particularly limited as long as it is an elastic and deformable material. A material for the pad portion 32 is preferably made of silicone, for example, which is good in texture and does not cause allergy.

Here, in the present embodiment, the half inner area of the pad portion 32 is height L ≈ approximately 16 mm × width W ≈ approximately 5 mm ≈ approximately 80 mm², and the entire inner contact area is approximately 80 × 2 ≈ approximately 160 mm². In the meanwhile, an area of one side of a pair of left and right nose pads for general glasses is height L ≈ approximately 5 mm x width W ≈ approximately 5 mm ≈ approximately 25 mm², and the left and right contact areas are approximately 25 × 2 ≈ approximately 50 mm². In such a manner, the pad portion 32 in the present embodiment has a contact area of more than three folds of nose pads of general glasses. In addition, by changing the height L of the pad portion 32, it is possible to adapt it to smaller and larger noses of different sizes and it is also possible to correspond to both Occidentals and Orientals.

### <Actions and effects of present wearable binoculars>

According to the wearable binoculars 1 of the present embodiment described above, it is possible to change a locking position with the nose by adjusting the opening angle of the nose pad 30 and carry out positional adjustment of the binocular main bodies to both eyes of the wearer. Thus, a conventional mechanical adjustment mechanism of a wearing position becomes not required and it is also possible to reduce load on the nose of the wearer. In addition, by enlarging the contact area of the pad portion 32, it is possible to distribute the load on the nose of the wearer and it is possible to obtain comfort of stable wearing and nice comfortable wear. Further, only by adjusting the opening angle of the nose pad 30 during going to the theater, watching sports, fishing, and the like, the wearer is capable of optimizing the positions of the binocular main bodies to both eyes. In addition to them, the framework 31 made of metal maintains the optimized opening angle and the pad portion 32 of an elastic body tightly attaches to the nose, so that it is possible to prevent position offset of the binocular main bodies to both eyes and it is also possible to maintain a stable visual field over a long period of time.

Since each temple 22 in a curved shape is locked corresponding to the curve of the temporal parts of the wearer with elasticity, it is possible to distribute the weight of each binocular main body 10 (including the interpupillary distance adjustment mechanism 13) coupled with the main frame 21 to the temporal parts of the wearer along the curved shape of each temple 22. Thus, it is possible to securely fix each binocular main body 10 to the temporal parts of the wearer and it is also possible to greatly reduce the load on the nose of the wearer. By such each temple 22 as well as the nose pad 30 described above, the weight of each binocular main body 10 is distributed effectively and also comfort of stable fitting to the temporal parts and the nose is obtained and it is possible to achieve nice comfortable wear not found in wearable binoculars in the past.

Each antislip member 22a of rubber or elastomer tightly attaches to the temporal parts of the wearer and it is possible to improve holding power and comfort of fitting of each temple 22 in a curved shape. Thus, the ratio of the weight of each binocular main body 10 born by each temple 22 in a curved shape increases and effective distribution of the weight is enabled.

By configuring each magnifying optical system 12 to be focus free, it is possible to omit a focus adjustment mechanism from the configuration of the wearable binoculars 1, and the entire weight reduction is enabled. The weight reduction of the wearable binoculars 1 reduces the load on the wearer and provides nicer comfortable wear. It is possible to focus a moving object without adjustment during going to the theater, watching sports, and the like, and it is possible to greatly improve the utility of the wearable binoculars. Further, the reduction of the focus adjustment mechanism also contributes to improve a degree of design freedom of the wearable binoculars 1.

Only by rotating the right-and-left screw 13a with the operation portion 13b, it is possible to cause the lens barrels 11 of the respective binocular main bodies 10 to come close or separate from each other and it is also possible to carry out interpupillary distance adjustment of each binocular main body 10 easily while it is simply configured. In addition, by employing the nose pad 30 and the focus free mechanism described above, the wearable binoculars 1 of the present embodiment has only to be provided with the interpupillary distance adjustment mechanism 13 as a mechanical adjuster, and it is possible to greatly reduce the weight and simplify each binocular main body 10. Such weight reduction and simplification of each binocular main body 10 bring notable improvement in the comfortable wearing of the present wearable binoculars.

By fixing the first and second coupling portions 14, 23 in approximately convex and concave shapes with the one pin 43 in the lateral direction and the two screws 41, 42 in the longitudinal direction, it is possible to firmly couple and fix theinterpupillary distance adjustment mechanism 13 to the main frame 21 and an integral joint between each binocular main body 10 and the frame 20 is enabled. Thus, it is possible to prevent position offset between both eyes of the wearer and the respective binocular main bodies 10 and contribute to continuous maintenance of a stable visual field.

In addition, by removing the pin 43 and the screws 41, 42, it is possible to separate each binocular main body 10 and the frame 20 from each other, and it is possible to easily repair or maintain these components. In particular, different specialists handle each binocular main body 10 as a magnifying optical system and the frame 20 as a metal or synthetic resin structure, so that it is possible to separate each binocular main body 10 from the frame 20 for manufacturing, repairing, or maintenance of these components by the right people at the right positions.

By making the back side (surface facing both eyes of the wearer) of each eye piece 15 to be an approximately flat surface, it is not only possible to block light from outside incident between both eyes of the wearer and the ocular lens with the eye pieces to improve visibility of an image and also possible to make comfortable wearing of the present wearable binoculars 1 better because each eye piece 15 formed in an approximately flat surface does not easily make contact with the eyelashes of the wearer.

### DESCRIPTION OF REFERENCE NUMERALS

- 1: wearable binocular
- 10: binocular main body
- 11: lens barrel
- 11a: joining portion
- 11b: sliding hole
- 12: magnifying optical system
- 12A: objective lens group
- 12B: erecting prism
- 12C: ocular lens group
- 13: interpupillary distance adjustment mechanism
- 13a: right-and-left screw
- 13b: operation portion
- 13c: cover
- 13d: groove
- 13e: guide rod
- 14: first coupling portion
- 14a: through hole
- 14b, 14c: screw hole
- 15: eye piece
- 16: decoration
- 20: frame
- 21: main frame
- 22: temple
- 22a: antislip member
- 23: second coupling portion
- 23a, 23b, 23c: through hole
- 30: nose pad
- 31: framework
- 32: pad portion
- 41, 42: screw
- 43, 44: pin

## Claims

1. Wearable binoculars comprising:
a binocular main body having a pair of lens barrels that support at least an objective lens and an ocular lens and mounting each lens barrel aligned in parallel with an interpupillary distance adjustment mechanism for adjusting an interval from each other;
a frame provided with a front main frame and a pair of temples extending backward from both sides of the main frame and the main frame coupled with the binocular main body, the temples locked on temporal parts and ears of a wearer to position the binocular main body in front of eyes; and
a nose pad having a deformable holding portion opened in approximately inverted truncated chevron shape, the holding portion locked on a nose of the wearer to support the binocular main body and also an opening angle of the holding portion being adjusted to change a locking position with the nose, and enabling positional adjustment of the binocular main body to both eyes of the wearer.

2. The wearable binoculars according to claim 1, wherein the nose pad has a deformable framework made of metal in an inverted V or U shape and a pad portion made of an elastic body covering the framework.

3. The wearable binoculars according to claim 1 or 2, wherein the temples have a curved shape corresponding to a curve of the temporal parts of the wearer to be locked on the temporal parts of the wearer with elasticity.

4. The wearable binoculars according to any one of claims 1 through 3, wherein at least a free end side of the temples is provided with antislip rubber or elastomer making contact with the temporal parts of the wearer.

5. The wearable binoculars according to any one of claims 1 through 4, wherein a focus of the objective lens is fixed near infinity capable of dispensing with focusing capability of the binocular main body.

6. The wearable binoculars according to any one of claims 1 through 5, wherein the interpupillary distance adjustment mechanism includes:
a right-and-left screw forming a male screw with right-hand and left-hand threads in opposite directions at both sides of a shaft;
an operation portion to rotate the right-and-left screw;
a cover covering the right-and-left screw provided with grooves defining a movable range of each lens barrel;
a joining portion of each lens barrel having a female screw screwed respectively with each of the male screw of the right-and-left screw; and
a guide rod arranged in parallel with the right-and-left screw, each lens barrel attached slidably at each side.

7. The wearable binoculars according to any one of claims 1 through 6, comprising a coupling structure to join the binocular main body and the main frame,
the coupling structure having a convex portion provided in one of the binocular main body or the main frame and a concave portion provided in another,
in a state of fitting the convex portion and the concave portion to each other, two screws or pins in parallel with a projecting direction of the convex portion are attached to reach the concave portion by penetrating both sides of the convex portion, and
one or two screws or pins intersecting with the projecting direction of the convex portion are attached by penetrating both the convex portion and the concave portion.

8. The wearable binoculars according to any one of claims 1 through 7, wherein eye pieces are provided so as to hang outward from around the ocular lens of each lens barrel and that has a surface facing both eyes of the wearer to be an approximately flat surface.
